# EUROPÄISCHE PATENTANMELDUNG

(11) **EP 4 428 008 A1**
(43) Veröffentlichungstag der Anmeldung: **11.09.2024**
(21) Anmeldenummer: 24158597.5
(22) Anmeldetag: 20.02.2024
(51) Int. Cl.: B61L 23/04, G06T 7/80

(54) **AUTOMATISCHE KALIBRIERUNG EINES SENSORSYSTEMS FÜR EIN SCHIENENFAHRZEUG**

(30) Priorität: 09.03.2023 DE 102023202129
(71) Anmelder: Siemens Mobility GmbH, 81739 München (DE)
(72) Erfinder: Bahlmann, Claus, 10707 Berlin (DE); Harapanahalli, Kaustubh, 560076 Bangalore (IN); Yildirim, Mehmet, 10715 Berlin (DE)
(74) Vertreter: Siemens Patent Attorneys

(57) **Zusammenfassung**

Es wird ein Verfahren zur automatischen Kalibrierung eines Sensorsystems zur Umgebungserfassung für ein Schienenfahrzeug (1) beschrieben. Bei dem Verfahren werden Testsensordaten (TSD), welche eine Landmarke (LM) in der Umgebung des Schienenfahrzeugs (1) umfassen, durch eine Sensoreinheit (SE) des Sensorsystems erfasst. Weiterhin wird eine geographische Position (P) der Landmarke (LM) auf Basis von bisher gültigen Werten (ASP) von Sensorparametern (SP) der Sensoreinheit (SE) und der Testsensordaten (TSD) ermittelt. Zusätzlich werden Vergleichsdaten (V) betreffend die geographische Position (P) der Landmarke (LM) ermittelt. Darauf wird auf Basis eines Vergleichsergebnisses (VE) eines Vergleichs zwischen der ermittelten geographischen Position (P) und den Vergleichsdaten (V) ermittelt, ob eine Re-Kalibrierung (RK) notwendig ist. Schließlich wird eine Re-Kalibrierung (RK) der Sensoreinheit (SE) auf Basis des Vergleichsergebnisses (VE) für den Fall, dass ermittelt wurde, dass eine Re-Kalibrierung (RK) notwendig ist, durchgeführt. Es wird auch eine automatische Kalibrierungseinrichtung (40) beschrieben. Weiterhin wird ein Schienenfahrzeug (1) beschrieben.

## Beschreibung

Die Erfindung betrifft ein Verfahren zur automatischen Kalibrierung eines Sensorsystems zur Umgebungserfassung für ein Schienenfahrzeug. Außerdem betrifft die Erfindung eine automatische Kalibrierungseinrichtung. Überdies betrifft die Erfindung ein Schienenfahrzeug.

Insbesondere im Rahmen des fahrerlosen, unbeaufsichtigten oder assistierten Fahrens werden eine Vielzahl unterschiedlicher Arten von Sensoren eingesetzt, um die Umgebung eines Fahrzeugs zu überwachen und eine automatisierte Reaktion auf die Umgebung des Fahrzeugs ermitteln und umsetzen zu können.

Auch zumindest teilautomatisierte und fahrerlose Zugsysteme müssen die Umgebung wahrnehmen und sind daher mit einem Sensorsystem mit einer Vielzahl von unterschiedlichen Sensoren ausgestattet. Typischerweise umfassen diese Sensoren ein oder mehrere Lidarsysteme und Kameras, insbesondere elektro-optische Kameras oder Infrarotkameras. Allerdings können auch andere aktive und passive Sensorsysteme eingesetzt werden.

Bei typischen Anwendungen derartiger Sensorik, wie zum Beispiel Mapping, Lokalisierung oder Hinderniserkennung, sind die Posen der Sensoren, auch als extrinsische Parameter bezeichnet, sowie die Projektionsparameter der Sensoren, auch als intrinsische Parameter bezeichnet, zur Verarbeitung der Sensordaten von Interesse. Diese sogenannten extrinsischen und intrinsischen Parameter werden herkömmlich vor dem Betriebsbeginn kalibriert. Für die Realisierung eines automatisierten Zugsystems ist die Qualität, Robustheit und Effizienz der Kalibrierung des zum automatisierten bzw. fahrerlosen Fahren genutzten Sensorsystems von besonderer Bedeutung.

Üblicherweise werden Kalibriertargets, d.h. zur Kalibrierung eingesetzte Referenzziele bzw. Referenzobjekte, benötigt, um besondere Merkmale (charakteristische 3D-Strukturen und/oder Texturen) bereitzustellen. Diese Merkmale ermöglichen den Einsatz von 2D-3D-Registrierungstechniken, um die gesuchten intrinsischen und extrinsischen Parameter abzurufen. Die Merkmale können manuell oder automatisch ausgewählt und zugeordnet werden, was entweder eine langwierige Aufgabe darstellt oder fehleranfällig ist. Darüber hinaus ist eine kontinuierliche Überwachung der Kalibrierparameter während des Systembetriebs nicht möglich, wenn spezielle Kalibrierziele erforderlich sind und sich die Anordnung der Sensoren bewegt.

Ein Beispiel für ein solches spezielles Kalibrierziel ist ein Schachbrettmuster, welches als Referenzziel genutzt wird. Dabei werden die von den Sensoren eines Schienenfahrzeugs ermittelten Positionen der einzelnen Felder des Schachbrettmusters mit den a-priori bekannten Referenz-Positionen dieser Felder verglichen. Wird ein solches Schachbrett positioniert, so kann seine Pose von einer vorbestimmten Referenz-Pose abweichen, was zu Fehlern bei der Kalibrierung führt.

Es besteht also die Aufgabe, ein ortsunabhängiges und auch während des Betriebs durchführbares Kalibrierungsverfahren für ein Sensorsystem zur Überwachung der Umgebung eines Schienenfahrzeugs bereitzustellen.

Diese Aufgabe wird durch ein Verfahren zur automatischen Kalibrierung eines Sensorsystems zur Umgebungserfassung für ein Schienenfahrzeug gemäß Patentanspruch 1, eine automatische Kalibrierungseinrichtung gemäß Patentanspruch 12 und ein Schienenfahrzeug gemäß Patentanspruch 13 gelöst.

Bei dem erfindungsgemäßen Verfahren zur automatischen Kalibrierung eines Sensorsystems zur Umgebungserfassung für ein Schienenfahrzeug werden zunächst Testsensordaten, welche eine Landmarke in der Umgebung des Schienenfahrzeugs umfassen, durch eine Sensoreinheit des Sensorsystems von der Umgebung erfasst. Eine Landmarke umfasst ein weithin sichtbares topographisches Objekt, dessen Position und Identität allgemein bekannt ist, beispielsweise anhand von hochgenauen Landkartendaten, und weitgehend unveränderlich ist. Wenn von einer Sensoreinheit im Zusammenhang mit der Lokalisierung von Landmarken gesprochen wird, so sind damit Sensoreinheit mit Sensoren bzw. Sensortypen umfasst, die für eine solche Lokalisierung geeignet sind. Solche Sensoren weisen eine Detektionsrichtung auf und ihnen sind die bereits erwähnten Werte für extrinsische und intrinsische Parameter bzw. Kalibrierparameter zugeordnet. Derartige Sensoren umfassen bevorzugt abtastende Sensoren, wie zum Beispiel Lidar-Sensoren, Infrarotsensoren, Ultraschallsensoren, Radarsensoren, aber auch bildgebende Sensoren, wie zum Beispiel Kameras, insbesondere 2D-Kameras und 3D-Kameras.

Schienenfahrzeuge, die Sensoreinheiten zur Lokalisierung von Objekten in ihrer Umgebung aufweisen, umfassen meist auch Einrichtungen zur Ermittlung der Ego-Pose dieser Sensoreinheiten. Denn nur, wenn die Ego-Pose einer Sensoreinheit bekannt ist, lässt sich eine Relativposition eines detektierten Objekts zu dem Schienenfahrzeug bzw. zu der Sensoreinheit selbst ermitteln und damit die Relevanz des Objekts für den weiteren Verlauf der Fahrt des Schienenfahrzeugs einschätzen. Solche Einrichtungen zur Ermittlung der Ego-Pose können zum Beispiel ein Satellitennavigationssystem, bevorzugt ein differentielles Satellitennavigationssystem und/oder ein Satellitennavigationssystem mit RTK-Korrekturdaten umfassen.

RTK-Korrekturdaten (RTK = real time kinematics = kinematische Echtzeitdaten) werden in der Geodäsie zur präzisen Bestimmung von Positionskoordinaten mit Methoden der Satellitennavigation verwendet. Dabei werden Genauigkeiten von 1 bis 2 cm erreicht. Die Koordinaten der Positionen werden nach einer Initialisierung in Echtzeit berechnet. Die Positionen werden durch Nutzung einer Referenz-Antenne einer Referenzstation und einer zweiten Antenne, die auf einem sogenannten Rover positioniert ist, ermittelt. Die Position des Rovers wird durch dreidimensionales polares Anhängen an die Referenzstation nach dem Basislinienverfahren ermittelt. Das Schienenfahrzeug kann hierbei die Funktion des Rovers übernehmen, während die Referenzstation beispielsweise durch eine Mobilfunkstation oder eine andere stationäre Funkeinrichtung wahrgenommen wird.

Weiterhin wird eine geographische Position der Landmarke auf Basis von bisher gültigen Werten von Sensorparametern der Sensoreinheit und den Testsensordaten sowie gegebenenfalls der Kenntnis der Ego-Position des Schienenfahrzeugs ermittelt. Die "bisher gültigen" Sensorparameter umfassen die bei der letzten Kalibrierung ermittelten Werte der Sensorparameter, insbesondere die dabei ermittelte Pose der Sensoreinheit, auch als extrinsische Parameter bezeichnet, sowie die Projektionsparameter der Sensoreinheit, auch als intrinsische Parameter bezeichnet. Diese Werte können sich aber seit der letzten Kalibrierung aufgrund einer Dejustage verändert haben.

Um nun die Güte der Lokalisierung der erfassten Landmarke zu ermitteln, werden Vergleichsdaten betreffend die geographische Position der Landmarke ermittelt. Diese Vergleichsdaten werden unabhängig von den Sensordaten der zu kalibrierenden Sensoreinheit ermittelt. Besonders vorteilhaft ist es, wenn die Vergleichsdaten eine hohe Präzision und Zuverlässigkeit aufweisen. Dies ist aber nicht unbedingt nötig, wie später noch im Einzelnen erläutert wird. Entscheidend ist nur, dass die beiden Datenquellen für die Lokalisierung der Landmarke, also die Messung durch die Sensoreinheit und die Vergleichsdaten, nicht zu stark korreliert sind.

Die Idee bei der Heranziehung der Vergleichsdaten besteht darin, dass sich bei einer Dejustage der Sensoreinheit eine Abweichung zwischen den auf Basis der Sensordaten der Sensoreinheit ermittelten Positionsdaten zur Lokalisierung der erfassten Landmarke und den Positionsdaten derselben Landmarke anhand der Vergleichsdaten ergibt.

Daher wird ein Vergleich zwischen der ermittelten geographischen Position und den Vergleichsdaten durchgeführt und es wird auf Basis eines Vergleichsergebnisses ermittelt, ob eine Re-Kalibrierung notwendig ist. Die Re-Kalibrierung ist dann notwendig, wenn das Vergleichsergebnis ein vorbestimmtes Kriterium für eine solche Re-Kalibrierung erfüllt. Ein solches Kriterium kann zum Beispiel das Überschreiten eines Schwellwerts umfassen, wobei der Schwellwert einen Schwellwert für eine Abweichung zwischen den auf Basis der Sensordaten der Sensoreinheit ermittelten Positionsdaten zur Lokalisierung der erfassten Landmarke und den Positionsdaten derselben Landmarke anhand der Vergleichsdaten darstellt oder der Schwellwert mit einem Wert verglichen wird, der auf der Basis dieser Abweichung berechnet wird.

Schließlich wird eine Re-Kalibrierung der Sensoreinheit auf Basis des Vergleichsergebnisses für den Fall, dass ermittelt wurde, dass eine Re-Kalibrierung notwendig ist, durchgeführt. Unter einer solchen Re-Kalibrierung soll eine erneute Kalibrierung verstanden werden, bei der die geänderten aktuellen "wahren" Kalibrierungsparameter bzw. Kalibrierungsparameterwerte der Sensoreinheit, also insbesondere die aktuellen "wahren" Werte für die intrinsischen und/oder extrinsischen Parameter der betreffenden Sensoreinheit, die sich möglicherweise seit der letzten Kalibrierung verändert haben, ermittelt werden. Die Re-Kalibrierung umfasst eine Ermittlung und Berechnung derjenigen Werte der Sensorparameter, bei denen die Abweichung zwischen gemessener und bekannter Position der erfassten Landmarke den Wert 0 aufweist oder ein Minimum aufweist oder zumindest einen vorbestimmten Schwellwert unterschreitet.

Die Re-Kalibrierung der Sensoreinheit erfolgt bevorzugt auf Basis einer Mehrzahl von detektierten Landmarken, besonders bevorzugt mindesten 3 Landmarken, ganz besonders bevorzugt mindestens 4 oder 5 Landmarken. Wie später im Einzelnen erläutert, können anhand der Mehrzahl von detektierten Landmarken auch eine Mehrzahl von Sensoreinheiten re-kalibriert werden.

Eine Kalibrierung anhand von 4 oder 5 3D-Punkten als Landmarken in Kamera-Bilddaten ist in Bill Triggs. "Camera Pose and Calibration from 4 or 5 known 3D Points.", 7th International Conference on Computer Vision (ICCV '99), Sep 1999, Kerkyra, Greece. pp.278-284,10.1109/ICCV.1999.791231. inria-00548311 beschrieben.

Vorteilhaft wird keine Vorbereitung einer Messanordnung für eine Kalibrierung, wie sie herkömmlich bei einer Kalibrierung mit einem Schachbrettmuster erfolgt, benötigt. Vielmehr kann ein beliebiges Szenario mit bekannten Landmarken für eine Kalibrierung genutzt werden. Außerdem ermöglicht die so ortsunabhängige Kalibrierung eine wiederholte Re-Kalibrierung einer Sensoreinheit während des normalen Betriebs eines Schienenfahrzeugs. Damit lassen sich Abweichungen der Sensorparameter, die durch physische Kräfte, die auf die Sensoreinheit einwirken, oder durch Temperaturänderungen während des Betriebs eines Schienenfahrzeugs verursacht werden, in Echtzeit kompensieren. Besonders vorteilhaft kann eine Überwachung einer korrekten Kalibrierung einer Sensoreinheit und eine möglicherweise nötige Re-Kalibrierung automatisiert ohne manuelle Unterstützung und auch kontinuierlich erfolgen, ohne dass spezielle Kalibrierungsobjekte in der Szene bzw. Umgebung benötigt werden.

Die erfindungsgemäße automatische Kalibrierungseinrichtung weist eine Eingangsschnittstelle zum Empfangen von Testsensordaten von einer Sensoreinheit eines Schienenfahrzeugs, welche eine Landmarke in der Umgebung des Schienenfahrzeugs umfassen, auf.

Teil der erfindungsgemäßen Kalibrierungseinrichtung ist auch eine Positionsermittlungseinheit zum Ermitteln einer geographischen Position auf Basis von bisher gültigen Werten von Sensorparametern der Sensoreinheit und auf Basis der Testsensordaten.

Die erfindungsgemäße Kalibrierungseinrichtung umfasst zudem eine Ermittlungseinheit zum Ermitteln von Vergleichsdaten betreffend die geographische Position der Landmarke.

Zum Ermitteln, ob eine Re-Kalibrierung notwendig ist, weist die erfindungsgemäße Kalibrierungseinrichtung eine Vergleichseinheit auf. Die Vergleichseinheit ist dazu eingerichtet, auf Basis eines Vergleichsergebnisses eines Vergleichs zwischen der anhand der Testsensordaten ermittelten geographischen Position der Landmarke und den Vergleichsdaten zu ermitteln, ob eines solche Re-Kalibrierung notwendig ist.

Schließlich umfasst die erfindungsgemäße Kalibrierungseinrichtung eine Re-Kalibrierungseinheit zum Durchführen einer Re-Kalibrierung der Sensoreinheit auf Basis des Vergleichsergebnisses. Die erfindungsgemäße Kalibrierungseinrichtung teilt die Vorteile des erfindungsgemäßen Verfahrens zur Kalibrierung eines Sensorsystems zur Umgebungserfassung für ein Schienenfahrzeug.

Das erfindungsgemäße Schienenfahrzeug weist eine Sensoreinheit zur Umgebungserfassung auf. Außerdem umfasst das erfindungsgemäße Schienenfahrzeug eine erfindungsgemäße Kalibrierungseinrichtung zur automatischen Kalibrierung der Sensoreinheit. Zudem weist das erfindungsgemäße Schienenfahrzeug eine Steuereinheit zur Steuerung einer Fahrt des Schienenfahrzeugs auf Basis von Sensordaten der Sensoreinheit auf. Die Steuereinheit wertet die Sensordaten auf Basis kalibrierter Sensorparameter der Sensoreinheit aus. Die Kalibrierung der Sensorparameter der Sensoreinheit erfolgt durch die erfindungsgemäße Kalibrierungseinrichtung. Das erfindungsgemäße Schienenfahrzeug teilt die Vorteile der erfindungsgemäßen Kalibrierungseinrichtung.

Ein Großteil der zuvor genannten Komponenten der Kalibrierungseinrichtung können ganz oder teilweise in Form von Softwaremodulen in einem Prozessor eines entsprechenden Rechensystems realisiert werden, z.B. von einer Steuereinheit eines Schienenfahrzeugs. Eine weitgehend softwaremäßige Realisierung hat den Vorteil, dass auch schon bisher verwendete Rechensysteme auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in ein Rechensystem ladbar ist, mit Programmabschnitten, um die Schritte des erfindungsgemäßen Verfahrens, zumindest die durch einen Computer ausführbaren Schritte, insbesondere die Schritte des Ermittelns einer geographischen Position der Landmarke, des Ermittelns von Vergleichsdaten betreffend die geographische Position der Landmarke, des Ermittelns, ob eine Re-Kalibrierung notwendig ist, und des Durchführens einer Re-Kalibrierung auszuführen, wenn das Programm in dem Rechensystem ausgeführt wird. Ein solches Computerprogrammprodukt kann neben dem Computerprogramm gegebenenfalls zusätzliche Bestandteile, wie z. B. eine Dokumentation, und/oder zusätzliche Komponenten, auch Hardware-Komponenten, wie z.B. Hardware-Schlüssel (Dongles etc.) zur Nutzung der Software, umfassen.

Zum Transport zum Rechensystem bzw. zur Steuereinheit und/oder zur Speicherung an oder in dem Rechensystem bzw. der Steuereinheit kann ein computerlesbares Medium, z.B. ein Memorystick, eine Festplatte oder ein sonstiger transportabler oder fest eingebauter Datenträger, auf welchem die von einem Rechensystem einlesbaren und ausführbaren Programmabschnitte des Computerprogramms gespeichert sind, dienen. Das Rechensystem kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer Ausgestaltung des erfindungsgemäßen Verfahrens zur automatischen Kalibrierung eines Sensorsystems zur Umgebungserfassung für ein Schienenfahrzeug umfasst das Ermitteln der Vergleichsdaten das Ermitteln einer exakten Referenzposition der Landmarke auf Basis von hochgenauen Landkartendaten als Vergleichsdaten. Hochgenaue Landkarten weisen Toleranzen von nur wenigen Zentimetern auf. Diese hohe Genauigkeit kontrastiert mit der Toleranz einer herkömmlichen Navigationskarte von etwa 7 Metern. Vorteilhaft kann die hohe Zuverlässigkeit und vor allem Genauigkeit der hochgenauen Landkartendaten als Referenzmaßstab genutzt werden, um eine Dejustage einer Sensoreinheit bzw. von deren Sensorparametern zu ermitteln.

In einer Ausgestaltung des erfindungsgemäßen Verfahrens zur automatischen Kalibrierung eines Sensorsystems zur Umgebungserfassung für ein Schienenfahrzeug wird eine Identität der Landmarke und die ihr zugeordnete exakte Referenzposition auf Basis eines Vergleichs der ermittelten geographischen Position der Landmarke mit Referenzpositionen von Kandidaten-Landmarken in den hochgenauen Landkartendaten ermittelt. Vorteilhaft kann eine Landmarke anhand ihrer Position durch Vergleich mit den Positionen in Frage kommender Kandidaten-Landmarken identifiziert werden. Alternativ oder zusätzlich können auch Abmessungen der erfassten Landmarke mit bekannten Abmessungen von Kandidaten-Landmarken, welche in den hochgenauen Landkartendaten eingezeichnet sind, verglichen werden, um die Identität der durch die Sensoreinheit erfassten Landmarke zu ermitteln. Vorteilhaft kann durch die Berücksichtigung der Information über Abmessungen und Umrisse der Landmarken die Informationsgrundlage und die Vergleichsgrundlage für eine Identifizierung der sensoriell erfassten Landmarke erweitert werden.

Bevorzugt wird bei eine solchen Identifizierung unter einer Mehrzahl von Kandidaten-Landmarken diejenige Kandidaten-Landmarke als die erfasste Landmarke identifiziert, deren Referenzposition am wenigsten von der ermittelten geographischen Position der erfassten Landmarke abweicht. Diese Variante ist besonders vorteilhaft, wenn die einzelnen Landmarken ausreichend weit voneinander beabstandet sind und/oder davon auszugehen ist, dass die Dejustage einer Sensoreinheit vergleichsweise gering ist, so dass die Abweichungen der Sensorparameter nur zu kleinen Fehlern bei der Lokalisierung von Objekten führen. Wird bei der Identifizierung noch ein Abgleich der Abmessungen der testweise erfassten Landmarke mit den Kandidaten-Landmarken durchgeführt, so können auch stärkere Abweichungen, bei denen der Fehler bei der Lokalisierung einer Landmarke so groß ist, dass die ermittelte fehlerhafte Position fälschlicherweise auf Basis der hochgenauen Landkartendaten einer anderen bzw. einer falschen Landmarke zugeordnet würde, durch die Berücksichtigung dieser zusätzlichen Informationen über deren Abmessungen kompensiert werden.

In einer Variante des erfindungsgemäßen Verfahrens zur automatischen Kalibrierung eines Sensorsystems zur Umgebungserfassung für ein Schienenfahrzeug wird die Re-Kalibrierung auf Basis eines Sensormodells durchgeführt. Das Sensormodell berücksichtigt Abweichungen der bisher gültigen extrinsischen und/oder intrinsischen Sensorparameter der Sensoreinheit von auf Basis der Vergleichsdaten ermittelten Vergleichswerten der extrinsischen und/oder intrinsischen Sensorparameter. Wie bereits erwähnt, umfassen extrinsische Sensorparameter die Pose eines Sensors bzw. einer Sensoreinheit, insbesondere die Ego-Position und die drei Euler-Winkel zur Repräsentation der Orientierung der Sensoreinheit. Unter intrinsischen Sensorparametern sind Projektionsparameter der Sensoreinheit zu verstehen. Diese intrinsischen Sensorparameter umfassen die Brennweite, die Position des optischen Zentrums, die optische Breite und die optische Höhe und die Verzeichnungsparameter. Werden beide Arten von zu kalibrierenden Sensorparametern bei einer (RE-)Kalibrierung berücksichtigt, so wird die Kalibrierung besonders exakt.

Die Re-Kalibrierung kann sowohl dadurch erfolgen, dass die zur Umgebungserfassung und insbesondere Lokalisierung von Objekten in der Umgebung genutzten bisher gültigen Werte der genannten Sensorparameter an die tatsächlichen Werte, die auf Basis des Vergleichs ermittelt wurden, angepasst werden. Es kann aber auch zu einer Justage der Sensoreinheit kommen, bei der die Sensoreinheit auf gewünschte Werte der Sensorparameter justiert wird und anschließend mittels des erfindungsgemäßen Verfahrens geprüft wird, ob die Justage erfolgreich ausgeführt wurde.

Das erfindungsgemäße Verfahren zur automatischen Kalibrierung eines Sensorsystems zur Umgebungserfassung für ein Schienenfahrzeug kann auch für eine kontinuierliche Überwachung der Sensorik eines Schienenfahrzeugs genutzt werden, wobei eine regelmäßige automatische Re-Kalibrierung des Schienenfahrzeugs auf Basis einer kontinuierlichen Erfassung der Umgebung während der Fahrt des Schienenfahrzeugs erfolgt. Vorteilhaft können Abweichungen der Sensorparameter der Sensoren eines Schienenfahrzeugs, die während des Betriebs des Schienenfahrzeugs auftreten, direkt während des Betriebs kompensiert werden, so dass eine Unterbrechung des Betriebs für eine Wartung oder eine Fehlfunktion bis zum nächsten Wartungsstopp nicht mehr in Kauf genommen werden muss.

Bevorzugt umfasst eine Landmarke bei dem erfindungsgemäßen Verfahren mindestens eine der folgenden Landmarkentypen:
- einen Oberleitungsmast,
- einen Signalmast
- einen Mast für ein Verkehrszeichen,
- einen elektrischen Kasten,
- eine Balise,
- eine Weiche,
- einen Weichenantrieb,
- einen Gleisverlauf,
- eine natürliche Landmarke.

Die genannten Landmarkentypen typischer an Bahngleisen vorhandener technischer Objekte eignen sich besonders gut für eine Kalibrierung einer Sensoreinheit eines Schienenfahrzeugs, weil sie relativ nah an den Bahngleisen stehen und daher von der Sensoreinheit des Schienenfahrzeugs leicht detektiert und lokalisiert werden können. Außerdem sind diese Objekte alle registriert und exakt kartographiert, so dass zuverlässige Vergleichsdaten bzw. Referenzdaten für die geographischen Positionen dieser Landmarken vorliegen.

Eine natürliche Landmarke umfasst ein naturgegebenes topographisches Objekt, wie zum Beispiel ein Baum oder eine Bergspitze. Vorteilhaft sind derartige Objekte häufig an Schienenstrecken zu finden und können somit als Landmarken genutzt werden.

Bevorzugt umfasst bei dem erfindungsgemäßen Verfahren die Sensoreinheit mindestens einen Sensor mit mindestens einem der folgenden Sensortypen:
- eine bildgebende Sensoreinheit,
- eine abtastende Sensoreinheit.

Eine bildgebende Sensoreinheit umfasst eine Sensoreinheit mit einer bildgebenden Sensorfläche, auf die ein erfasster Abschnitt des Umfelds der bildgebenden Einheit projiziert wird. Eine bildgebende Sensoreinheit umfasst bevorzugt eine elektro-optische Kamera oder eine Infrarot-Kamera.

Eine abtastende Sensoreinheit umfasst eine aktive Abtasteinheit, mit der ein abzutastender Bereich des Umfelds der abtastenden Sensoreinheit in unterschiedlichen Richtungen punktweise abgetastet wird. Eine solche abtastende Sensoreinheit umfasst bevorzugt eine LIDAR-Einheit oder eine Radar-Einheit.

Werden unterschiedliche Sensoren für eine Lokalisierung einer Landmarke genutzt, so können Sensordaten auch als Vergleichsdaten genutzt werden, wenn eine Änderung der Werte der einzelnen Sensorparameter der unterschiedlichen Sensoren nicht miteinander korreliert ist.

Die jeweilige Sensoreinheit umfasst bevorzugt einen oder mehrere MEMS-basierte Sensoren. MEMS-basierte Systeme umfassen Inertialsensoren, d.h. Beschleunigungs- und Drehsensoren. Sie werden zur Lageerkennung eingesetzt. Sie werden auch als mechanische Bildstabilisatoren für bildgebende Sensoreinheiten, insbesondere Kameras, oder abbildende Scaneinheiten, insbesondere Lidar-Sensoreinheiten eingesetzt.

Bevorzugt umfassen bei dem erfindungsgemäßen Verfahren die Testsensordaten eines oder mehrere Testbilder. Anhand eines oder mehrerer Testbilder kann ein Objekt in dem einen oder den mehreren Testbildern lokalisiert und dessen Lage und Position relativ zu der zu kalibrierenden Sensoreinheit ermittelt werden.

In einer besonders praktikablen Variante des erfindungsgemäßen Verfahrens umfasst das Sensorsystem mindestens eine erste Sensoreinheit und eine zweite Sensoreinheit. Dabei umfasst der Schritt des Erfassens von Testsensordaten das Erfassen von ersten Testsensordaten durch die erste Sensoreinheit und von zweiten Testsensordaten durch die zweite Sensoreinheit. Sowohl die ersten Testsensordaten als auch die zweiten Testsensordaten umfassen die Landmarke, welche zu Testzwecken erfasst wird.

Außerdem umfasst das Ermitteln einer geographischen Position der Landmarke das Ermitteln von ersten geographischen Positionsdaten der Landmarke auf Basis der ersten Testsensordaten und auf Basis bisher gültiger Werte der Sensorparameter der ersten Sensoreinheit.

Zudem umfasst das Ermitteln von Vergleichsdaten das Ermitteln von zweiten geographischen Positionsdaten der Landmarke auf Basis der zweiten Testsensordaten und auf Basis bisher gültiger Werte der Sensorparameter der zweiten Sensoreinheit. "Erste und zweite geographische Positionsdaten" soll bedeuten, dass die Position der Landmarke zweimal, und zwar von der ersten Sensoreinheit und der zweiten Sensoreinheit ermittelt wird. Selbstverständlich befindet sich die Landmarke jeweils an derselben Position. Allerdings werden bei einer Dejustage möglicherweise von den unterschiedlichen Sensoreinheiten auch unterschiedliche Positionen ermittelt. Vorteilhaft können als Vergleichsdaten Messdaten bzw. Sensordaten genutzt werden, die unabhängig von externen Datenbanken oder Kartendaten verfügbar sind. Vorteilhaft kann eine Kalibrierung auch dann durchgeführt werden, wenn ein Zugang zu Datenbanken mit hochgenauen Landkartendaten nicht möglich ist oder die zur Kalibrierung verwendeten Landmarken, beispielsweise natürliche Landmarken, wie zum Beispiel Bäume, in den hochgenauen Landkartendaten nicht eingezeichnet sind.

Bei dieser Variante erfolgt bevorzugt das Durchführen einer Re-Kalibrierung der ersten Sensoreinheit und der zweiten Sensoreinheit auf Basis von ersten Sensordaten der ersten Sensoreinheit und zweiten Sensordaten der zweiten Sensoreinheit, wobei die ersten Sensordaten und zweiten Sensordaten jeweils eine Mehrzahl von vorzugsweise denselben Landmarken umfassen. Vorteilhaft können nicht korrelierte Abweichungen bzw. Dejustagen einzelner Sensoreinheiten durch eine Mittelung bzw. eine gewichtete Mittelung unterschiedlicher Sensordaten von unterschiedlichen Sensoreinheiten und einer Mehrzahl von Landmarken eliminiert oder zumindest reduziert werden. Ein solcher Mittelwert kann dann als Referenzposition bzw. Referenzwert für eine Re-Kalibrierung der unterschiedlichen Sensoreinheiten genutzt werden. Es kann auch der Fall eintreten, dass die ermittelten Positionsdaten einer Mehrzahl von Sensoren bzw. Sensoreinheiten übereinstimmen und nur eine oder wenige Sensoreinheiten, deren Positionsdaten dann von den Positionsdaten der übrigen Sensoreinheiten abweichen, dejustiert sind. Auf Basis dieser Anomalie kann ein dejustierter Sensor erkannt werden und auf Basis der korrekten Positionsdaten der übrigen Sensoreinheiten re-kalibriert werden. Es sind auch komplexere Herangehensweisen mit einer Anwendung von Filtern oder KI-basierten Ansätzen zur Re-Kalibrierung einer oder mehrerer Sensoreinheiten auf Basis von Sensordaten einer Mehrzahl von Sensoreinheiten möglich.

Ist eine der Sensoreinheiten besonders vertrauenswürdig, weil ihre extrinsischen und intrinsischen Parameter erfahrungsgemäß nur vergleichsweise wenig Aberration von einer ursprünglichen Kalibrierung aufweisen, beispielsweise eine Lidareinheit, so kann eine von der vertrauenswürdigen Sensoreinheit gemessene Position einer oder mehrerer Landmarken mit den von den anderen zu kalibrierenden Sensoreinheiten ermittelten Positionen derselben Landmarken verglichen werden und zur Kalibrierung dieser Sensoreinheiten genutzt werden. Vorteilhaft werden auch bei dieser Variante keine zusätzlichen Vergleichsdaten aus Datenbanken benötigt, da die Vergleichsdaten durch die zuverlässige Sensoreinheit bereits mitgeliefert werden.

Die Erfindung wird im Folgenden unter Hinweis auf die beigefügten Figuren anhand von Ausführungsbeispielen noch einmal näher erläutert. Es zeigen:
FIG 1 eine schematische Darstellung einer herkömmlichen Anordnung zur Kalibrierung eines Sensorsystems eines Schienenfahrzeugs,
FIG 2 eine schematische Darstellung eines Szenarios einer Kalibrierung einer Sensoreinheit eines Schienenfahrzeugs gemäß einem Ausführungsbeispiel der Erfindung,
FIG 3 ein Flussdiagramm, welches ein Verfahren zur Kalibrierung eines Sensorsystems zur Umgebungserfassung für ein Schienenfahrzeug gemäß einem Ausführungsbeispiel der Erfindung veranschaulicht,
FIG 4 eine schematische Darstellung einer Kalibrierungseinrichtung gemäß einem Ausführungsbeispiel der Erfindung,
FIG 5 eine schematische Darstellung eines Schienenfahrzeugs gemäß einem Ausführungsbeispiel der Erfindung,
FIG 6 ein Flussdiagramm, welches ein Verfahren zur Kalibrierung eines Sensorsystems zur Umgebungserfassung für ein Schienenfahrzeug gemäß einem Ausführungsbeispiel der Erfindung veranschaulicht.

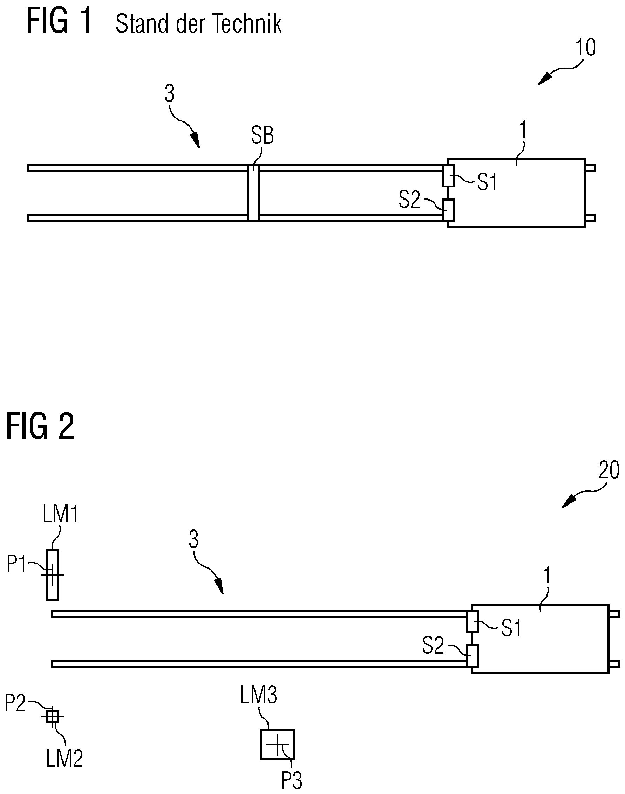

In FIG 1 ist eine schematische Darstellung einer herkömmlichen Anordnung 10 zur Kalibrierung eines Sensorsystems eines Schienenfahrzeugs 1 veranschaulicht. Die Anordnung 10 umfasst einen Gleiskörper 3, auf dem das Schienenfahrzeug 1 positioniert ist. Das Schienenfahrzeug 1 umfasst eine Mehrzahl von Sensoreinheiten S1, S2, die mit Hilfe eines Schachbretts SB, dass vor dem Schienenfahrzeug 1 an einer vorbestimmten Position angeordnet ist, kalibriert werden. Für eine Kalibrierung muss zunächst die dreidimensionale Pose des Schachbretts SB und dessen Schachbrettfelder exakt vermessen werden. Dann werden Positionen der einzelnen Schachbrettfelder durch die Sensoreinheiten S1, S2 erfasst und lokalisiert und die so ermittelten Positionen mit den vorbekannten Positionsdaten dieser Schachbrettfelder verglichen.

In FIG 2 ist eine schematische Darstellung eines Szenarios 20 einer automatischen Kalibrierung eines Sensorsystems mit zwei Sensoreinheiten S1, S2 eines Schienenfahrzeugs 1 gemäß einem Ausführungsbeispiel der Erfindung veranschaulicht. Das Schienenfahrzeug 1 befindet sich ähnlich wie in dem in FIG 1 gezeigten Szenario auf einem Gleiskörper. Bei dem in FIG 2 gezeigten Szenario erfolgt jedoch eine Kalibrierung der Sensoreinheiten S1, S2 des Schienenfahrzeugs 1 nicht auf Basis eines an einer bestimmten Stelle für diesen Zweck angeordneten Schachbretts, sondern auf Basis einer Mehrzahl von Landmarken LM1, LM2, LM3, deren geographische Positionen P1, P2, P3 exakt bekannt sind. Die geographischen Positionen P1, P2, P3 der Landmarken LM1, LM2, LM3 sind beispielsweise aus hochgenauen Landkartendaten LKD bereits bekannt. Daher muss eine Vermessung der Landmarken LM1, LM2, LM3 nicht mehr durchgeführt werden. Vielmehr lässt sich die Kalibrierung der Sensoreinheiten S1, S2 des Schienenfahrzeugs 1 an einem beliebigen Ort im Schienennetz, in dessen Bereich sich in einer hochgenauen Landkarte eingezeichnete Landmarken befinden, durchführen.

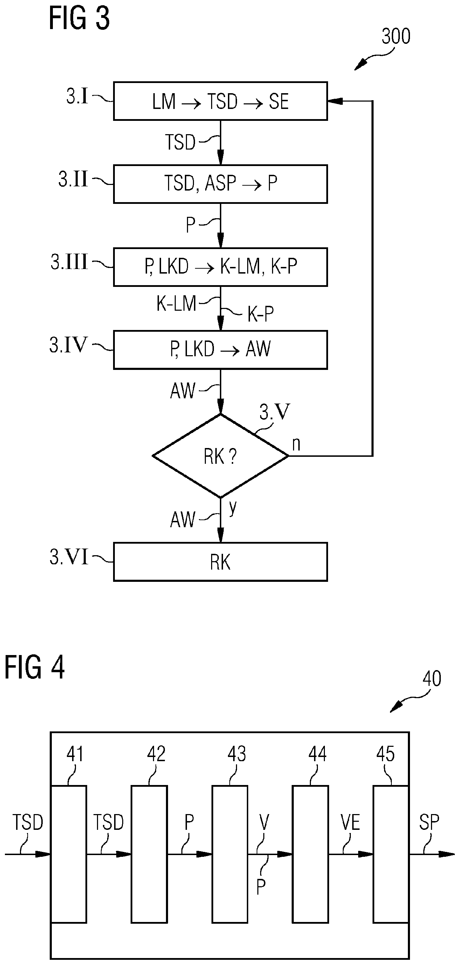

In FIG 3 ist ein Flussdiagramm 300 gezeigt, welches ein Verfahren zur automatischen Kalibrierung eines Sensorsystems zur Umgebungserfassung für ein Schienenfahrzeug 1 gemäß einem Ausführungsbeispiel der Erfindung veranschaulicht.

Bei dem Schritt 3.1 werden zunächst Testsensordaten TSD, welche eine Landmarke LM in der Umgebung des Schienenfahrzeugs 1 umfassen, durch eine Sensoreinheit SE des Schienenfahrzeugs 1 erfasst. Die Sensoreinheit SE umfasst eine Lidareinheit, mit welcher Objekte lokalisiert und deren Umrisse abgetastet werden können. Insbesondere können Entfernungen zu Objekten, insbesondere Landmarken, durch Laufzeitmessungen ermittelt werden. Weiterhin kann eine Messung einer Richtung, in der sich das jeweilige Objekt relativ zur Sensoreinheit befindet, auf Basis der definierten Richtung der Emission des Laserstrahls der Lidareinheit erfolgen. Auch die Abmessungen eines zu erfassenden Objekts können durch ein Abtasten des Objekts mit einer Punktwolke ermittelt werden.

Bei dem Schritt 3.II wird eine geographische Position P der Landmarke LM auf Basis von bisher gültigen Werten ASP von Sensorparametern SP der Sensoreinheit SE und der bei dem Schritt ermittelten Testsensordaten TSD ermittelt. Die bisher gültigen Wert ASP der Sensorparameter SP umfassen, wie bereits erläutert, Werte für extrinsische und intrinsische Sensorparameter SP, die zu einem Zeitpunkt in der Vergangenheit kalibriert wurden. Allerdings können sich die "wahren" Werte dieser Sensorparameter SP mit der Zeit verschieben, so dass die Sensoreinheit SE nicht mehr korrekt kalibriert ist.

Bei dem Schritt 3.III wird auf Basis der ermittelten geographischen Position P und der erfassten Umrisse der erfassten Landmarke LM eine Identifizierung der Landmarke LM vorgenommen. Hierzu wird eine hochgenaue Landkarte hinzugezogen, auf der eine Vielzahl von Kandidaten-Landmarken K-LM exakt eingezeichnet sind. Dabei werden die Positionen K-P der in der Landkarte eingezeichneten Kandidaten-Landmarken K-LM, mit der durch die Sensoreinheit SE ermittelten geographischen Position P der Landmarke LM verglichen.

Bei dem Schritt 3.III wird weiterhin eine Kandidaten-Landmarke K-LM, deren Kandidaten-Position und Umrisse am besten mit der ermittelten geographischen Position P und den Umrissen der Landmarke LM übereinstimmen, als die erfasste Landmarke LM identifiziert. Beispielsweise sind die Abmessungen der einzelnen Kandidaten-Landmarken K-LM in der hochgenauen Landkarte exakt bekannt. In die nähere Auswahl kommen dann nur Kandidaten-Landmarken K-LM, deren Abmessungen mit den ermittelten Abmessungen der durch die Sensoreinheit SE erfassten Landmarke LM zumindest annähernd übereinstimmen. Von der Gruppe der so vorselektierten Kandidaten-Landmarken K-LM wird dann diejenige Kandidaten-Landmarke K-LM mit der erfassten Landmarke LM, deren geographische Position K-P zu der ermittelten geographischen Position P der Landmarke LM am nächsten liegt, identifiziert.

Bei dem Schritt 3.IV wird eine Abweichung AW zwischen der wahren geographischen Position der identifizierten Landmarke LM, welche aus den hochgenauen Landkartendaten LKD ablesbar ist, und der durch die Sensoreinheit SE ermittelten geographischen Position P der Landmarke LM ermittelt.

Auf Basis der Abweichung AW wird dann bei dem Schritt 3.V entschieden, ob eine Re-Kalibrierung RK der Sensoreinheit SE notwendig ist. Beispielsweise wird bei diesem Schritt 3.V ermittelt, ob die Abweichung AW einen vorbestimmten Schwellwert überschreitet. Wird bei dem Schritt 3.V ermittelt, dass eine Re-Kalibrierung RK notwendig ist, was in FIG 3 mit "y" symbolisiert ist, so wird zu dem Schritt 3.VI übergegangen, bei dem eine Re-Kalibrierung der Sensoreinheit SE vorgenommen wird. Bei der Re-Kalibrierung werden entweder die Werte der Sensorparameter SP der Sensoreinheit SE geändert oder das Sensormodell der betreffenden Sensoreinheit SE an die aktuellen veränderten Werte, d.h. die dejustierten Sensorparameter angepasst.

Wird dagegen bei dem Schritt 3.V ermittelt, dass keine Re-Kalibrierung notwendig ist, weil sich die Werte der Sensorparameter SP der Sensoreinheit SE nicht geändert haben, was in FIG 3 mit "n" symbolisiert ist, so wird zu dem Schritt 3.1 zurückgekehrt und die Überwachung der Umgebung des Schienenfahrzeugs 1 mit der Sensoreinheit SE fortgesetzt.

In FIG 4 ist eine schematische Darstellung einer automatischen Kalibrierungseinrichtung 40 gemäß einem Ausführungsbeispiel der Erfindung veranschaulicht.

Die Kalibrierungseinrichtung 40 weist eine Eingangsschnittstelle 41 zum Empfangen von Testsensordaten TSD von einer Sensoreinheit SE eines Schienenfahrzeugs 1 auf. Die Testsensordaten TSD beinhalten eine erfasste Position einer Landmarke LM in der Umgebung des Schienenfahrzeugs 1, welche zu Kalibrierungszwecken erfasst wurde.

Die Kalibrierungseinrichtung 40 umfasst auch eine Positionsermittlungseinheit 42 zum Ermitteln einer geographischen Position P der Landmarke LM auf Basis von bisher gültigen Werten ASP von Sensorparametern der Sensoreinheit SE und der erfassten Testsensordaten TSD.

Die Kalibrierungseinrichtung 40 umfasst zudem eine Ermittlungseinheit 43 zum Ermitteln von Vergleichsdaten V betreffend die geographische Position der Landmarke LM. Hierzu werden die bereits im Zusammenhang mit FIG 3 erwähnten hochgenauen Landkartendaten LKD von der Umgebung des Schienenfahrzeugs 1 herangezogen. Die Ermittlungseinheit 43 führt außerdem eine Zuordnung einer in den hochgenauen Landkartendaten LKD eingezeichneten Kandidaten-Landmarke K-LM zu der auf Basis der Testsensordaten TSD erfassten Landmarke LM durch.

Die Kalibrierungseinrichtung 40 umfasst überdies eine Vergleichseinheit 44 zum Ermitteln, ob einer Re-Kalibrierung notwendig ist, auf Basis eines Vergleichsergebnisses VE eines Vergleichs zwischen der auf Basis der Testsensordaten TSD ermittelten geographischen Position P der Landmarke LM und den Vergleichsdaten V.

Schließlich umfasst die Kalibrierungseinrichtung 40 noch eine Re-Kalibrierungseinheit 45 zum Durchführen einer Re-Kalibrierung der Sensoreinheit SE auf Basis des Vergleichsergebnisses VE, wobei als Ergebnis adjustierte Sensorparameter SP ausgegeben werden.

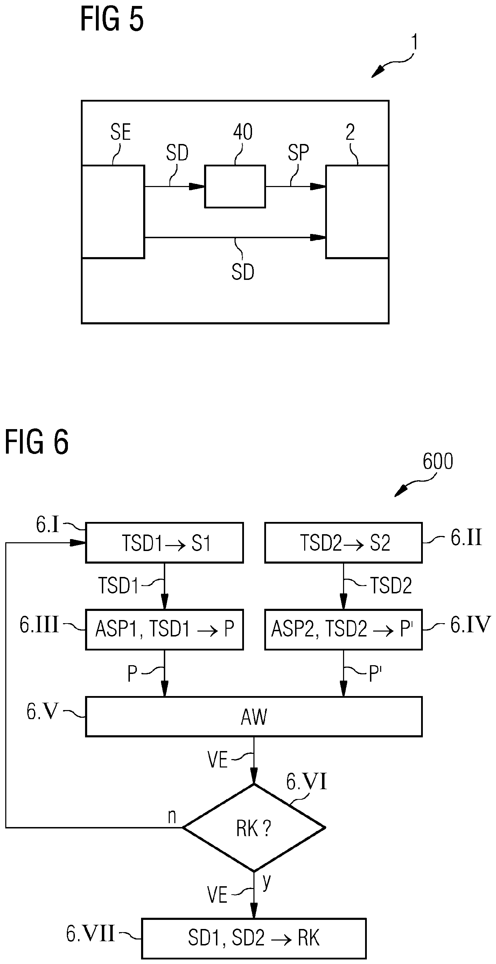

In FIG 5 ist eine schematische Darstellung eines Schienenfahrzeugs 1 gemäß einem Ausführungsbeispiel der Erfindung veranschaulicht. Das Schienenfahrzeug 1 weist eine Sensoreinheit SE zur Umgebungserfassung auf. Teil des Schienenfahrzeugs 1 ist auch eine automatische Kalibrierungseinrichtung 40 gemäß einem Ausführungsbeispiel der Erfindung, wie sie bereits im Zusammenhang mit FIG 4 ausführlich erläutert wurde. Die Kalibrierungseinrichtung 40 empfängt von der Sensoreinheit SE Sensordaten SD und ermittelt auf deren Basis kalibrierte Sensorparameter SP. Die kalibrierten Sensorparameter SP werden an eine Steuereinheit 2 zur Steuerung einer Fahrt des Schienenfahrzeugs 1, die ebenfalls Teil des Schienenfahrzeugs 1 ist, übermittelt. Die Steuereinheit 2 nutzt nun die aktualisierten bzw. adjustierten Sensorparameter SP zur Ermittlung von Positionen detektierter Objekte in der Umgebung des Schienenfahrzeugs 1 auf Basis von Sensordaten SD der Sensoreinheit SE.

In FIG 6 ist ein Flussdiagramm 600 gezeigt, welches ein Verfahren zur Kalibrierung eines Sensorsystems zur Umgebungserfassung für ein Schienenfahrzeug 1 gemäß einem Ausführungsbeispiel der Erfindung veranschaulicht.

Bei dem Schritt 6.1 werden von einer ersten Sensoreinheit S1 des Sensorsystems, beispielsweise eine Lidareinheit, von der Umgebung des Schienenfahrzeugs 1 erste Testsensordaten TSD1, die eine Landmarke LM umfassen, erfasst.

Bei dem Schritt 6.II werden durch eine zweite Sensoreinheit S2 des Sensorsystems, beispielsweise eine elektro-optische Kamera, zweite Testsensordaten TSD2, die ebenfalls die Landmarke LM umfassen, von der Umgebung des Schienenfahrzeugs 1 erfasst.

Bei dem Schritt 6.III werden erste geographische Positionsdaten P der Landmarke LM in den ersten Testsensordaten TSD1 auf Basis der ersten Testsensordaten TSD1 und der bisher gültigen Werte ASP1 der Sensorparameter der ersten Sensoreinheit S1 ermittelt.

Bei dem Schritt 6.IV werden auf Basis der zweiten Testsensordaten TSD2 und auf Basis bisher gültiger Werte ASP2 der Sensorparameter der zweiten Sensoreinheit S2 Vergleichsdaten, welche zweite geographische Positionsdaten P' der Landmarke LM umfassen, ermittelt.

Bei dem Schritt 6.V erfolgt anschließend ein Vergleich zwischen den ersten geographischen Positionsdaten P und den zweiten geographischen Positionsdaten P'. Dabei wird als Vergleichsergebnis VE eine Abweichung AW zwischen den ersten geographischen Positionsdaten P und den zweiten geographischen Positionsdaten P' ermittelt.

Weiterhin wird bei dem Schritt 6.VI auf Basis des Vergleichsergebnisses VE ermittelt, ob eine Re-Kalibrierung der Sensoreinheiten S1, S2 erfolgen soll. Wurde bei dem Schritt 6.V eine Abweichung AW zwischen den ersten geographischen Positionsdaten P und den zweiten geographischen Positionsdaten P' ermittelt, die einen vorbestimmten Schwellwert überschreitet, so wird bei dem Schritt 6.VI entschieden, dass eine Re-Kalibrierung notwendig ist, was in FIG 6 mit "y" gekennzeichnet ist. Anschließend wird zu dem Schritt 6.VII übergegangen, bei dem eine Re-Kalibrierung RK der Sensoreinheiten S1, S2 auf Basis einer Erfassung einer Vielzahl von Landmarken LM1, LM2, LM3 vorgenommen wird. Bei der Re-Kalibrierung werden entweder die bisher gültigen Werte ASP1, ASP2 der Sensorparameter der einzelnen Sensoreinheiten S1, S2 geändert oder das Sensormodell für die Auswertung der Sensordaten dieser Sensoreinheiten S1, S2 an die ermittelten veränderten Werte der Sensorparameter der unterschiedlichen Sensoreinheiten S1, S2 angepasst.

Wird dagegen bei dem Schritt 6.VI ermittelt, dass keine Re-Kalibrierung RK notwendig ist, weil sich die bisher gültigen Werte ASP1, ASP2 der Sensorparameter SP der Sensoreinheiten S1, S2 nicht geändert haben, was in FIG 6 mit "n" symbolisiert ist, so wird zu dem Schritt 6.I und 6.II zurückgekehrt und die Überwachung der Umgebung des Schienenfahrzeugs 1 mit den Sensoren S1, S2 fortgesetzt.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten, die gegebenenfalls auch räumlich verteilt sein können, besteht.

## Patentansprüche

1. Verfahren zur automatischen Kalibrierung eines Sensorsystems zur Umgebungserfassung für ein Schienenfahrzeug (1), aufweisend die Schritte:
- Erfassen von Testsensordaten (TSD), welche eine Landmarke (LM) in der Umgebung des Schienenfahrzeugs (1) umfassen, durch eine Sensoreinheit (SE) des Sensorsystems,
- Ermitteln einer geographischen Position (P) der Landmarke (LM) auf Basis von bisher gültigen Werten (ASP) von Sensorparametern (SP) der Sensoreinheit (SE) und der erfassten Testsensordaten (TSD),
- Ermitteln von Vergleichsdaten (V) betreffend die geographische Position (P) der Landmarke (LM),
- Ermitteln, ob eine Re-Kalibrierung (RK) notwendig ist, auf Basis eines Vergleichsergebnisses (VE) eines Vergleichs zwischen der ermittelten geographischen Position (P) und den Vergleichsdaten (V),
- Durchführen einer Re-Kalibrierung (RK) der Sensoreinheit (SE) auf Basis des Vergleichsergebnisses (VE) für den Fall, dass ermittelt wurde, dass eine Re-Kalibrierung (RK) notwendig ist.

2. Verfahren nach Anspruch 1, wobei das Ermitteln der Vergleichsdaten (V) das Ermitteln einer exakten Referenzposition der Landmarke (LM) auf Basis von hochgenauen Landkartendaten (LKD) als Vergleichsdaten (V) umfasst.

3. Verfahren nach Anspruch 2, wobei eine Identität der Landmarke (LM) und die ihr zugeordnete exakte Referenzposition auf Basis eines Vergleichs der ermittelten geographischen Position (P) mit Referenzpositionen von Kandidaten-Landmarken (K-LM) in den hochgenauen Landkartendaten (LKD) ermittelt werden.

4. Verfahren nach Anspruch 3, wobei unter einer Mehrzahl von Kandidaten-Landmarken (K-LM) diejenige Kandidaten-Landmarke (K-LM) als die erfasste Landmarke (LM) identifiziert wird, deren Referenzposition am wenigsten von der ermittelten geographischen Position (P) der erfassten Landmarke (LM) abweicht.

5. Verfahren nach einem der vorstehenden Ansprüche, wobei das Durchführen der Re-Kalibrierung auf Basis eines Sensormodells erfolgt, welches Abweichungen (AW) der bisher gültigen Werte (ASP) der extrinsischen und/oder intrinsischen Sensorparameter (SP) der Sensoreinheit (SE) von auf Basis der Vergleichsdaten (V) ermittelten Vergleichswerten der extrinsischen und/oder intrinsischen Sensorparameter (SP) berücksichtigt.

6. Verfahren nach einem der vorstehenden Ansprüche, wobei eine regelmäßige automatische Re-Kalibrierung (RK) des Schienenfahrzeugs (1) auf Basis einer kontinuierlichen Erfassung der Umgebung während der Fahrt des Schienenfahrzeugs (1) erfolgt.

7. Verfahren nach einem der vorstehenden Ansprüche, wobei eine Landmarke (LM) mindestens eine der folgenden Landmarkentypen umfasst:
- einen Oberleitungsmast,
- einen Signalmast,
- einen Mast für ein Verkehrszeichen,
- einen elektrischen Kasten,
- eine Balise,
- eine Weiche,
- einen Weichenantrieb,
- einen Gleisverlauf,
- eine natürliche Landmarke.

8. Verfahren nach einem der vorstehenden Ansprüche, wobei die Sensoreinheit (SE) mindestens eine Sensoreinheit (SE) mit mindestens einem der folgenden Sensortypen umfasst:
- eine bildgebende Sensoreinheit,
- eine abtastende Sensoreinheit.

9. Verfahren nach einem der vorstehenden Ansprüche, wobei die Testsensordaten (TSD) ein Testbild umfassen.

10. Verfahren nach einem der vorstehenden Ansprüche, wobei
- das Sensorsystem mindestens eine erste Sensoreinheit (S1) und eine zweite Sensoreinheit (S2) umfasst und
- der Schritt des Erfassens von Testsensordaten (TSD) das Erfassen
- von ersten Testsensordaten (TSD1) durch die erste Sensoreinheit (S1),
und
- von zweiten Testsensordaten (TSD2) durch die zweite Sensoreinheit (S2) umfasst,
- das Ermitteln einer geographischen Position (P) das Ermitteln von ersten geographischen Positionsdaten (P) der Landmarke (LM) auf Basis der ersten Testsensordaten (TSD1) und auf Basis bisher gültiger Werte (ASP1) der Sensorparameter (SP) der ersten Sensoreinheit (S1) umfasst,
und
- das Ermitteln von Vergleichsdaten das Ermitteln zweiter geographischer Positionsdaten (P') der Landmarke (LM) auf Basis der zweiten Testsensordaten (TSD2) und auf Basis bisher gültiger Werte (ASP2) der Sensorparameter (SP) der zweiten Sensoreinheit (S2) umfasst.

11. Verfahren nach Anspruch 10, wobei das Durchführen einer Re-Kalibrierung der ersten Sensoreinheit (S1) und der zweiten Sensoreinheit (S2) auf Basis von ersten Sensordaten (SD1) der ersten Sensoreinheit (S1) und zweiten Sensordaten (SD2) der zweiten Sensoreinheit (S2), welche eine Mehrzahl von erfassten Landmarken (LM1, LM2, LM3) umfassen, erfolgt.

12. Automatische Kalibrierungseinrichtung (40), aufweisend:
- eine Eingangsschnittstelle (41) zum Empfangen von Testsensordaten (TSD) von einer Sensoreinheit (SE) eines Schienenfahrzeugs (1), welche eine Landmarke (LM) in der Umgebung des Schienenfahrzeugs (1) umfassen,
- eine Positionsermittlungseinheit (42) zum Ermitteln einer scheinbaren geographischen Position (P) auf Basis von bisher gültigen Werten (ASP) von Sensorparametern (SP) der Sensoreinheit (SE),
- eine Ermittlungseinheit (43) zum Ermitteln von Vergleichsdaten (V) betreffend die geographische Position der Landmarke (LM),
- eine Vergleichseinheit (44) zum Ermitteln, ob einer Re-Kalibrierung (RK) notwendig ist, auf Basis eines Vergleichsergebnisses (VE) eines Vergleichs zwischen der scheinbaren geographischen Position (P) und den Vergleichsdaten (V),
- eine Re-Kalibrierungseinheit (45) zum Durchführen einer Re-Kalibrierung der Sensoreinheit (SE) auf Basis des Vergleichsergebnisses (VE).

13. Schienenfahrzeug (1), aufweisend:
- eine Sensoreinheit (SE) zur Umgebungserfassung,
- eine automatische Kalibrierungseinrichtung (40) nach Anspruch 12 zur automatischen Kalibrierung der Sensoreinheit (SE),
- eine Steuereinheit (2) zur Steuerung einer Fahrt des Schienenfahrzeugs (1) auf Basis von Sensordaten (SD) der Sensoreinheit (SE).

14. Computerprogrammprodukt, umfassend Befehle, die bei der Ausführung des Programms durch einen Computer diesen veranlassen, die Schritte des Ermittelns einer geographischen Position (P), des Ermittelns von Vergleichsdaten (V) betreffend die geographische Position (P) der Landmarke (LM), des Ermittelns, ob eine Re-Kalibrierung notwendig ist, und des Durchführens einer Re-Kalibrierung des Verfahrens nach einem der Ansprüche 1 bis 11 auszuführen.

15. Computerlesbares Speichermedium, umfassend Befehle, die bei der Ausführung durch einen Computer diesen veranlassen, die Schritte des Ermittelns einer geographischen Position (P), des Ermittelns von Vergleichsdaten (V) betreffend die geographische Position (P) der Landmarke (LM), des Ermittelns, ob eine Re-Kalibrierung notwendig ist, und des Durchführens einer Re-Kalibrierung des Verfahrens nach Anspruch 1 bis 11 zur Durchführung einer Kalibrierung auszuführen.
